# EUROPEAN PATENT SPECIFICATION

(11) **EP 3 507 200 B1**
(45) Date of publication and mention of the grant of the patent: **21.10.2026**
(21) Application number: 17777069.0
(22) Date of filing: 05.09.2017
(51) Int. Cl.: B65D 21/08

(54) **COLLAPSIBLE CONTAINER**
ZUSAMMENKLAPPBARER BEHÄLTER
CONTENANT EXTENSIBLE

(30) Priority: 05.09.2016 GB 201615043
(43) Date of publication of application: 10.07.2019
(73) Proprietor: TIDDLERINC Limited, York YO42 1TX (GB)
(72) Inventor: CHENEY, Paul, Woodlesford Leeds, LS26 8SG (GB)
(74) Representative: Aldridge, Christopher Simon
(86) International application number: PCT/GB2017/052580
(87) International publication number: WO 2018/042210

(56) References cited:
- EP-A1- 2 138 074
- WO-A1-2014/036107
- WO-A1-2016/051208
- WO-A1-95/24347
- WO-A1-98/29315
- ES-U- 1 065 717
- US-A- 5 224 613
- US-A- 5 226 551
- US-A- 5 533 638
- US-A- 5 860 556
- US-A1- 2001 052 523
- US-A1- 2014 263 375

## Description

The present invention relates to an improved collapsible container for one or more items.

Although the following description refers to single containers for food and drink type items, the person skilled in the art will appreciate that the present invention could be used to contain and transport other non-food based items and is not limited to food, drink and beverages. In addition, the skilled person will recognise that the container may be used for multiple times.

The provision of collapsible containers where the container is formed by expansion at the point of use rather than transporting the void through the point of use is known.

WO2015/054402 discloses a container that can be moved between a collapsed and expanded form using a series of living hinges to create a concertina arrangement. Potential problems with such a container are two-fold:
A) a series of living hinges can create difficulties in production of the container, such a container can be costly to produce on a significant scale; and
B) a series of living hinges contain sufficient potential energy which can be released when minimal force or heat is applied.

Document US2001/052523A1 shows a container according to the preamble of claim 1.

It is therefore an aim of the present invention to provide an improved container that addresses the abovementioned problems.

It is a further aim of the present disclosure to provide a method of manufacturing a container that addresses the abovementioned problems.

It is a yet further aim of the present disclosure to provide a method of combining one or more items in a container that addresses the abovementioned problems.

Accordingly, the present invention is directed to a substantially circular container according to accompanying claim 1. Preferred features are set out in the accompany sub-claims. Thus, according to the invention there is provided a container for food and/or beverage type items, said container at least partially defined by two or more wall portions, said wall portions including at least a first sidewall portion, and at least one thin or foldable wall portion, said container also including a base portion and a lid and is convertible between a first substantially flattened storage or transport condition and a second in-use or expanded condition by manipulation of the wall portions and/or base, said at least one thin wall portion being formed or located between a first sidewall portion and the base, wherein the thin wall portion is between, or is substantially between, 0.25 mm and 0.45 mm.

According to the invention, the container is manufactured from polypropylene.

According to the invention the thin wall portion of a substantially polypropylene material is 0.25-0.45mm thick or in cross sectional width. Typically, the wall thickness is substantially 0.31mm.

Typically, the additives for hot fill and/or cold fill applications are one or more plasticisers.

According to the invention, the thin wall portion is curved or non-linear when in at least the second in-use or expanded condition. The top to bottom length of the thin wall portion is at least 25 % greater or longer than the distance between first and second sidewall portions and/or at least 25 % greater or longer than the linear distance between a sidewall portion and the base portion when viewed in plan in said second or in-use or expanded condition.

Thus, a collapsible container is provided that can be converted between a collapsed or storage configuration and an expanded configuration. Typically, the thin wall portion is and/or substantially forms a region of flexion. Further typically, the thin wall bends, flexes, folds or the like at one or more points on the area of the same when moving the container between the first and second conditions.

In a preferred embodiment, the container includes first and at least a second sidewall portion wherein said thin wall portion is disposed or located substantially between the side wall portions. Typically, the second sidewall portion is attached to and/or depends from the base portion. Further typically, the thin wall portion forms a band around the container.

Typically, the at least one thin wall bands are formed circumferentially around the container. The at least one thin wall band can be between sidewall portions, or according to the invention between a sidewall portion and the base, or between a sidewall portion and the lid.

In one embodiment, the thin wall portion depends from the second sidewall portion forming a region of flexion between said first and second sidewall portion and is attached to the bottom of the first sidewall portion, typically the thin wall is flexible or substantially more flexible than the thin wall. Typically, the thin wall portion depends from substantially the top of the second sidewall portion.

In one embodiment the area where the thin wall portion and the second sidewall portion is connected includes some resilience and/or is resiliently biased. Typically, the area acts as a spring that substantially holds the container in the first and/or second conditions.

In one embodiment, at one or more locations the thin wall portion extends substantially vertically, or along a substantially vertical axis into an adjacent sidewall portion. This creates areas within the thicker sidewall portion that is capable of moving or flexing as the container is moved from the first condition to the second condition for use

Preferably, the container includes a lid, wherein at least a portion of the lid is removable to access the items contained therein in use.

Preferably, the container is provided with a sealed lid in the first condition.

Typically, at least the sidewall portions are substantially linear, straight or non-curved when viewed in vertical cross-section. Further typically, the thin wall portion is substantially curved, non-linear and/or S-shaped when viewed in vertical cross section in at least the second condition.

In one embodiment, the thin wall portions are substantially inverted and/or turned upside down when moving the container from the first condition to the second condition.

Typically, the thin wall portion is smaller in cross sectional area or diameter when compared to the one or more sidewall portions. Further typically, the at least one sidewall portion is thicker or larger in cross section in comparison to the one or more thin wall portions.

Further typically, the sidewall portions are more rigid than the thin wall portions.

Typically, at least part of the thin wall portions rolls when moving the container between the first and second conditions This ensures that the side wall portions remain in the same plain when moving between conditions.

Typically, the size of the container is increased or expanded in at least one dimension when moved from the first to the second condition.

In one embodiment the thin wall portions at least partially define one or more compartments. Typically, the thin wall portions, sidewall portions and/or the base portion define one or more compartments when in the first condition. Further typically, the sidewall portions, thin wall portions and the base define a single compartment in the second in use condition.

In one embodiment, the thin wall portions are connected or substantially attached to the base and/or sidewall portions by one or more flexible portions, sprung portions, fold-lines and/or the like.

Thus, items can be kept separate in different compartments inside a container when in the first condition and by manipulation of the container the contents can be mixed and/or a larger compartment formed.

In one embodiment, an outer sidewall is located substantially around the periphery of the container in at least the first condition.

In one embodiment, at least a first thin wall portion is located substantially between the outer wall and a second sidewall portion located inside the outer wall portion when in the first condition.

In one embodiment, the container includes a second thin wall portion located substantially between a second and third side wall portions. Typically, that the walls of a container can be formed by a series of side wall portions with thin wall portions disposed between the same. Further typically, the walls of the container comprise alternating sidewall portions and thin wall portions.

In one embodiment, the compartments are substantially concentric with the outer sidewall portion.

In one embodiment, at least part of the thin or foldable wall portion and/or regions of flexion are manipulated or moved to substantially extend the walls and/or height of the container in the second expanded in-use condition. Further typically, the compartments are combined or consolidated by the movement of the thin wall potions towards the second condition.

Typically, the wall portions and/or the base portion retain substantially their original shape or form when in at least the second condition.

In one embodiment, the regions of flexion form one or more ridges or peaks when in at least the first condition. Typically, the side wall members are substantially vertical when in the first and/or second condition.

In one embodiment, the container includes a rim portion, which may depend outwardly from the edge of the outer side wall.

In one embodiment, the container is expanded or extended from the base potion by pulling the rim and/or outer wall upwards or in combination or alternatively pulling the base downwards, thereby expanding the container in a substantially vertical direction.

In one embodiment, the container includes one or more grip members to provide the user with a portion or section to grip or hold and enable the container to be moved from the first to at least the second condition. Typically, the grip members are any one or any combination of tabs, labels, flaps and/or the like.

According to the invention the wall portions, including the sidewall portion and thin wall portions, and/or the base portion are formed from single point injection moulding. Typically, the moulding process is single point hot tip injection moulding to form the container.

Typically, the wall or walls closest to the point at which polymer is injected into the injection forming mould are substantially circular. Single point injection moulding and the substantially circular shape of the container combine to ensure the correct molecular alignment as the polymer flows into the mould. It is critical when injection moulding the present invention that the length of the polymer molecular chain flows across and not around at least the thin wall portion or areas of flexion

In a yet further aspect of the disclosure there is provided a method of manufacturing a container, said container including an outer wall, a foldable portion and a lid, at least a portion of the lid being removable to access the items contained therein in use and the container is convertible between a first substantially flattened storage or transport condition and a second in-use condition container by manipulation of the foldable potion wherein the foldable portion forms one or more compartments inside the container when in the first condition, said method including the step of;
- substantially forming at least part of the container from plastics material.

Specific embodiments of the invention are now described with reference to the following figures wherein;
Figure 1 shows views of a container according to one embodiment of the invention;
Figures 2a-2c shows cross sectional views of containers illustrating how the thin wall portion/area of flexion distorts as the container is collapsed and then returned to its extended state;
Figure 3 shows an embodiment of the invention where two different food products can be stored in separate compartments;
Figures 4a and 4b shows an embodiment of the present invention in its extended state;
Figures 5a and 5b show an embodiment of the present invention in its collapsed state;
Figures 6a and 6b shows the present invention in its collapsed state with lid attached;
Figures 7a and 7b show one embodiment of the present invention with two areas of flexion and three fixed walls; and
Figure 8 shows how the polymer molecular chain flows across and not around the areas of flexion when the present invention is manufactured using the single point injection moulding process.

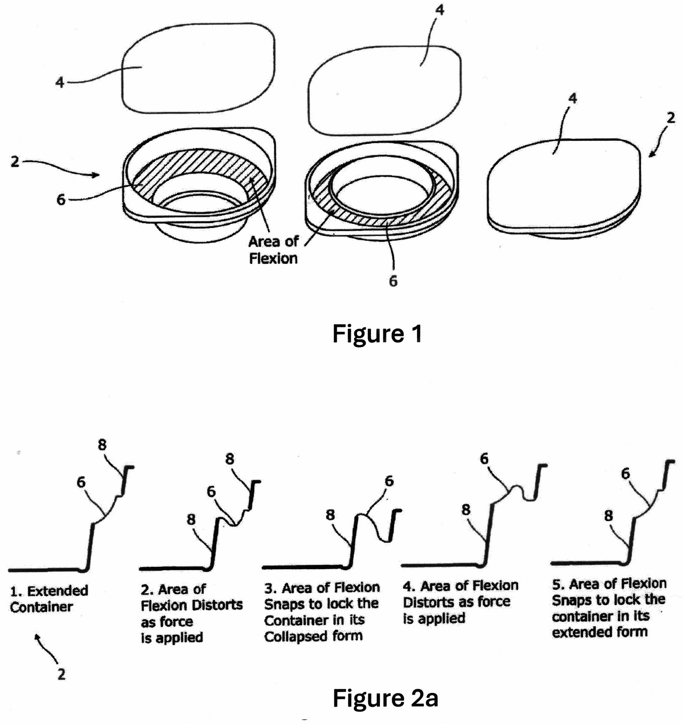

The present invention relates to a collapsible plastic packaging container 2 with sealed lid 4 as shown in Figure 1. The body of the container is primarily constructed from polypropylene with a separate lid 4 sealed to it enabling the package to contain, preserve, protect, store and merchandise the product it contains.

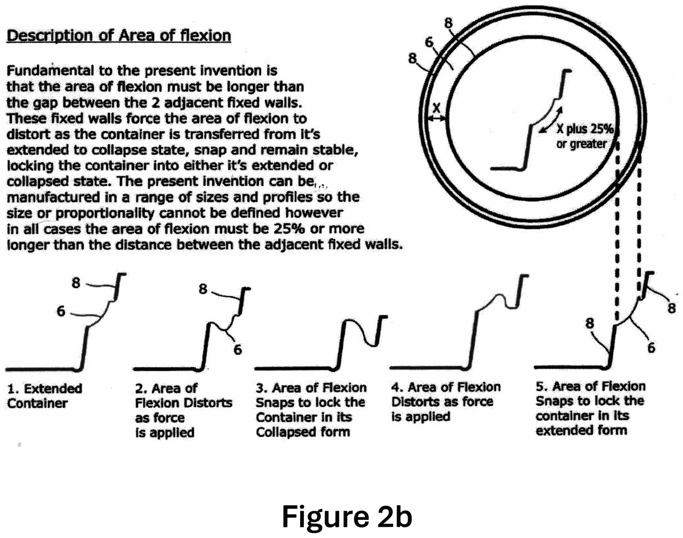

The container is configured with one or more thin flexible wall portions 6, henceforth referred to as "Areas of Flexion" which, when force is applied distort, collapse and snap into an inverted position allowing the container to collapse and revert to its extended form whilst remaining stable in either its extended or collapsed state. The side wall portions 8 are relatively inflexible or more rigid compared to the areas of flexion 6. The process of inversion or extension and compression and how it snaps into place in either state is shown in figure 2b

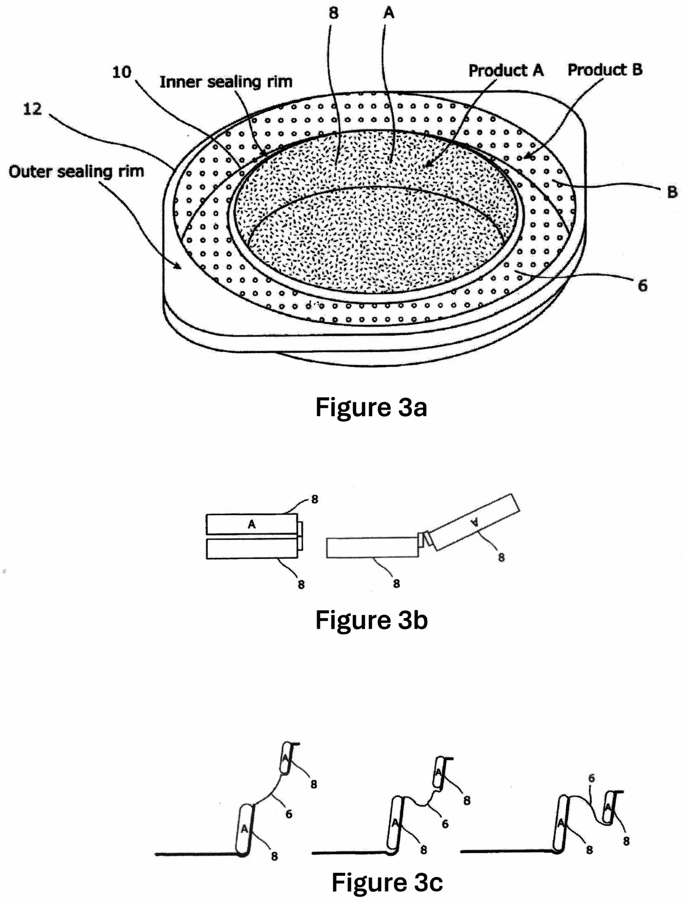

A flexible film lid 4 can be sealed to one or more walls of the container allowing one or more products A, B to be contained discreetly within, as shown in figure 3 where the lid is sealed to the inner sealing rim 10 and an outer sealing rim 12 defining two discreet annular portions or chambers within the container in its collapsed state. The filled package is transported, stored and sold in its collapsed state. The consumer opens the container and pops the container back up into its original extended form, creating the void required for product to be mixed, prepared, dispensed or consumed directly from.

The present invention relies on the areas of flexion to distort and snap into position making the collapsed and extended container rigid and stable in either state. The material must be thin enough to distort as force is applied and have enough strength to snap into position when manipulated from its collapsed to extended state or vice versa. The present invention can be manufactured in a range of sizes and profiles so the size or proportionality cannot be defined however in all cases the area of flexion or thin wall is 25% or more longer (vertically from top to bottom) than the distance between the adjacent thick walls when viewed in plan as shown in figure 2b.

This arrangement is significantly different to a "living hinge" arrangement shown in figure 3c which is utilised in packaging materials such as toothpaste and sauce caps. Here the thick or side wall portions are inverted to effect the transfer from the open to closed state. The present invention utilises an area of flexion 6 and two adjacent fixed walls to effect a transfer from its extended to collapsed state. The area of flexion 6 rolls rather than hinging. This unique element ensures both adjacent walls remain in the same plain as shown in figure 3d, i.e. are not inverted as with a living hinge.

In one embodiment the present invention is manufactured from Polypropylene base material plus additives for hot fill, microwave and other food applications. The area of flexion on such material is typically between 0.25mm and 0.45mm, ideally 0.31mm.

The present invention is manufactured by single point injection moulding method.

In one embodiment, at least part of the film lid can be selectively removed. Typically, at least part of the lid can be removed to open one or more compartments, leaving one or more compartments closed.

Someone skilled in the art would appreciate that it is possible to produce such a container with up to seven combinations of rigid walls and areas of flexion.

In one embodiment, the foldable portion is located substantially between the outer wall or walls.

In one embodiment, the compartments are substantially concentric with the outer wall.

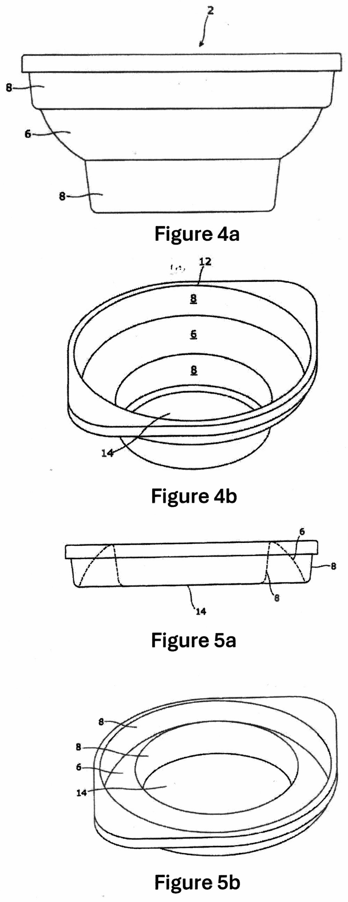

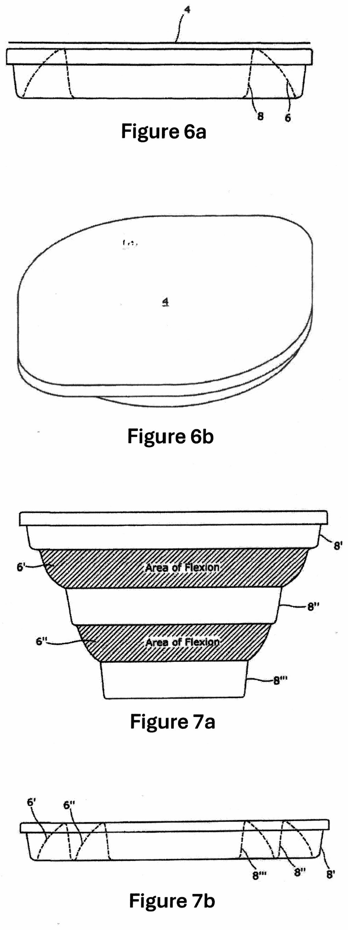

Turning to figures 4a and 4b, which show the present invention in its extended state forming a circular bowl with one area of flexion 6 and two rigid side walls 8. The bowl in this example includes a circular base 14, which is also more rigid than the area of flexion 6. The bowl in its collapsed configuration is shown in figures 5a and 5b, and the same embodiment including a lid 4 is shown in figures 6a and 6b.

Figures 7a and 7b also show extended and collapsed configurations with two areas of flexion 6', 6" between three fixed or side walls 8', 8", 8‴.

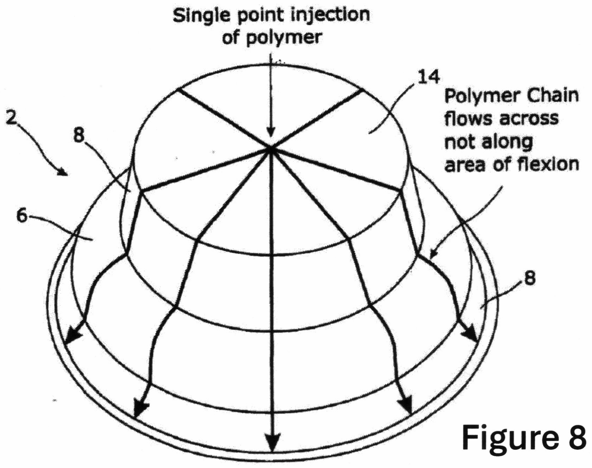

Turning to figure 8, it is shown how the polymer molecular chain flows across and not around the areas of flexion when the present invention is manufactured using the single point injection moulding process. Finally, someone skilled in the art will recognise the top section of the container i.e. above the final area of flexion could be moulded into many shapes.

## Claims

1. A substantially circular container for both storage and preparation of food and/or beverage type items, said container is manufactured from polypropylene and at least partially defined by two or more wall portions, said wall portions including,
at least a first sidewall portion, and at least one thin or foldable wall portion,
said container also including a base portion and a lid and is convertible between a first substantially flattened storage or transport condition and a second in-use or expanded condition by manipulation of the wall portions and/or base,
said at least one thin wall portion being formed or located between a first sidewall portion and the base,
wherein the thin wall portion is between, or is substantially between, 0.25-0.45 mm thick, and
is substantially curved, non-linear when viewed in vertical cross section in at least the second in-use or expanded condition
wherein the top to bottom length of the thin wall portion is at least 25 % greater or longer than the linear distance between first and second sidewall portions and/or at least 25 % greater or longer than the linear distance between a sidewall portion and the base portion, where the linear distance is the horizontal distance between the sidewall portion and a second sidewall portion or the base portion when viewed in horizontal or plan cross section in said second or in-use or expanded condition
and wherein the sidewall portion and at least one thin wall portion partition the inside of the container into two or more separate compartments for location or separation of food or beverage items when in the first flattened storage or transport condition, said compartments concentric with the first sidewall portion
**characterised by** the thin walled portion being between 0.25-0.45 mm thick, and the container being formed by single point injection moulding, which ensures the correct molecular alignment of the polymer by flowing the polymer across and not around the at least one thin or foldable wall portion.

2. A container according to claim 1 wherein the polypropylene material thin wall thickness is substantially 0.31mm.

3. A container according to claim 1 wherein the container is manufactured from polypropylene base material plus plasticiser additives for hot fill, microwave and other food applications.

4. A container according to claim 1 wherein the container includes first and at least a second sidewall portion wherein said thin wall portion is disposed or located substantially between the side wall portions.

5. A container according to claim 4 wherein the second sidewall portion is attached to and/or depends from the base portion.

6. A container according to any preceding claim wherein the thin wall portion forms a band around the container.

7. A container according to any preceding claim wherein the container includes a lid wherein at least a portion of the lid being removable to access the items contained therein in use.

8. A container according to claim 1 wherein the sidewall portions are substantially linear, straight or non-curved when viewed in vertical cross-section.

9. A container according to claim 8 wherein the thin wall portions are more flexible or less rigid than the side wall portions and roll when moving the container between the first and second conditions.

## Patentansprüche

1. Im Wesentlichen kreisförmiger Behälter sowohl zum Aufbewahren als auch zum Zubereiten von Produkten des Typs Lebensmittel und/oder Getränke, wobei der Behälter aus Polypropylen hergestellt ist und mindestens teilweise durch zwei oder mehr Wandabschnitte definiert ist, wobei die Wandabschnitte Folgendes enthalten,
mindestens einen ersten Seitenwandabschnitt und mindestens einen dünnen oder faltbaren Wandabschnitt,
wobei der Behälter auch einen Bodenabschnitt und einen Deckel enthält und durch Manipulation der Wandabschnitte und/oder des Bodens zwischen einem ersten, im Wesentlichen abgeflachten Aufbewahrungs- oder Transportzustand und einem zweiten Einsatz- oder entfalteten Zustand umwandelbar ist,
wobei der mindestens eine dünne Wandabschnitt zwischen einem ersten Seitenwandabschnitt und dem Boden ausgebildet oder positioniert ist,
wobei der dünne Wandabschnitt zwischen oder im Wesentlichen zwischen 0,25-0,45 mm dick ist und
im vertikalen Querschnitt gesehen, in mindestens dem zweiten Einsatz- oder entfalteten Zustand im Wesentlichen gekrümmt, nichtlinear ist,
wobei die Länge des dünnen Wandabschnittes von oben nach unten mindestens 25 % größer oder länger als der lineare Abstand zwischen dem ersten und dem zweiten Seitenwandabschnitt und/oder mindestens 25 % größer oder länger als der lineare Abstand zwischen einem Seitenwandabschnitt und dem Bodenabschnitt ist, wobei der lineare Abstand der horizontale Abstand zwischen dem Seitenwandabschnitt und einem zweiten Seitenwandabschnitt oder dem Bodenabschnitt ist, wenn er im horizontalen oder planaren Querschnitt im zweiten oder Einsatz- oder entfalteten Zustand betrachtet wird,
und wobei der Seitenwandabschnitt und mindestens ein dünner Wandabschnitt das Innere des Behälters in zwei oder mehr separate Fächer zur Aufnahme oder Trennung von Lebensmittel- oder Getränkeprodukten im ersten abgeflachten Aufbewahrungs- oder Transportzustand unterteilen, wobei die Fächer konzentrisch mit dem ersten Seitenwandabschnitt sind,
**dadurch gekennzeichnet, dass** der dünne Wandabschnitt zwischen 0,25-0,45 mm dick ist und der Behälter durch Einzelpunkt-Spritzgießen ausgebildet wird, das die korrekte molekulare Ausrichtung des Polymers sicherstellt, indem das Polymer über und nicht um den mindestens einen dünnen oder faltbaren Wandabschnitt fließt.

2. Behälter nach Anspruch 1, wobei die Dicke der dünnen Wand aus Polypropylenmaterial im Wesentlichen 0,31 mm beträgt.

3. Behälter nach Anspruch 1, wobei der Behälter aus Polypropylen-Basismaterial plus Weichmacheradditiven für Heißabfüll-, Mikrowellen- und andere Lebensmittelanwendungen hergestellt ist.

4. Behälter nach Anspruch 1, wobei der Behälter einen ersten und mindestens einen zweiten Seitenwandabschnitt enthält, wobei der dünne Wandabschnitt im Wesentlichen zwischen den Seitenwandabschnitten angeordnet oder positioniert ist.

5. Behälter nach Anspruch 4, wobei der zweite Seitenwandabschnitt an dem Bodenabschnitt angebracht ist und/oder an diesem hängt.

6. Behälter nach einem vorhergehenden Anspruch, wobei der dünne Wandabschnitt ein Band um den Behälter ausbildet.

7. Behälter nach einem vorhergehenden Anspruch, wobei der Behälter einen Deckel enthält, wobei mindestens ein Abschnitt des Deckels entfernbar ist, um beim Einsatz auf die darin enthaltenen Produkte zuzugreifen.

8. Behälter nach Anspruch 1, wobei die Seitenwandabschnitte im vertikalen Querschnitt gesehen im Wesentlichen linear, gerade oder nicht gekrümmt sind.

9. Behälter nach Anspruch 8, wobei die dünnen Wandabschnitte flexibler oder weniger steif sind als die Seitenwandabschnitte und rollen, wenn der Behälter zwischen dem ersten und dem zweiten Zustand bewegt wird.

## Revendications

1. Contenant sensiblement circulaire pour le stockage et la préparation d'articles de type aliment et/ou boisson, ledit contenant est fabriqué à partir de polypropylène et au moins partiellement défini par deux parties parois ou plus, lesdites parties parois comprenant,
au moins une première partie paroi latérale, et au moins une partie paroi mince ou pliable, ledit contenant comprenant également une partie base et un couvercle et pouvant être converti entre un premier état de stockage ou de transport sensiblement aplati et un second état d'utilisation ou étendu par manipulation des parties parois et/ou base,
ladite au moins une partie paroi mince étant formée ou située entre une première partie paroi latérale et la base
ladite partie paroi mince étant comprise entre, ou étant comprise sensiblement entre, 0,25-0,45 mm d'épaisseur, et
étant sensiblement courbée, non linéaire lorsqu'elle est vue en coupe verticale dans au moins le second état d'utilisation ou étendu
ladite longueur de haut en bas de la partie paroi mince étant au moins 25 % plus grande ou plus longue que la distance linéaire entre les première et seconde parties parois latérales et/ou au moins 25 % plus grande ou plus longue que la distance linéaire entre une partie paroi latérale et la partie base, où la distance linéaire est la distance horizontale entre la partie paroi latérale et une seconde partie paroi latérale ou la partie base lorsqu'elle est vue en coupe transversale horizontale ou en plan dans ledit second état d'utilisation ou étendu
et ladite partie paroi latérale et au moins une partie paroi mince séparant l'intérieur du contenant en deux, ou plus, compartiments séparés pour l'emplacement ou la séparation des articles d'aliments ou de boissons lorsqu'ils sont dans le premier état de stockage ou de transport aplati, lesdits compartiments étant concentriques avec la première partie paroi latérale
**caractérisé par** une épaisseur de la partie paroi mince comprise entre 0,25-0,45 mm et la formation du contenant par un moulage par injection par un seul point, qui assure l'alignement moléculaire correct du polymère en faisant couler le polymère à travers et non autour d'au moins une partie paroi mince ou pliable.

2. Contenant selon la revendication 1, l'épaisseur de paroi mince de matériau polypropylène étant sensiblement de 0,31 mm.

3. Contenant selon la revendication 1, ledit contenant étant fabriqué à partir d'un matériau à base de polypropylène et d'additifs plastifiants pour le remplissage à chaud, les micro-ondes et d'autres applications alimentaires.

4. Contenant selon la revendication 1, ledit contenant comprenant une première et au moins une seconde partie paroi latérale, ladite partie paroi mince étant disposée ou située sensiblement entre les parties parois latérales.

5. Contenant selon la revendication 4, ladite seconde partie paroi latérale étant fixée à la partie base et/ou dépendant de cette dernière.

6. Contenant selon une quelconque revendication précédente, ladite partie paroi mince formant une bande autour du contenant.

7. Contenant selon une quelconque revendication précédente, ledit contenant comprenant un couvercle, au moins une partie du couvercle étant amovible pour accéder aux articles contenus à l'intérieur de celui-ci lors de l'utilisation.

8. Contenant selon la revendication 1, lesdites parties parois latérales étant sensiblement linéaires, droites ou non courbées lorsqu'elles sont vues en coupe transversale verticale.

9. Contenant selon la revendication 8, lesdites parties parois minces étant plus souples ou moins rigides que les parties parois latérales et roulant lors du déplacement du contenant entre les premier et second états.
